# EUROPEAN PATENT SPECIFICATION

(11) **EP 1 060 071 B1**
(45) Date of publication and mention of the grant of the patent: **19.02.2003**
(21) Application number: 98904824.4
(22) Date of filing: 03.02.1998
(51) Int. Cl.: B29D 29/06

(54) **METHOD OF MAKING A STEEL CABLE REINFORCED CONVEYOR BELT**
VERFAHREN ZUR HERSTELLUNG EINES MIT STAHLKABELN VERSTÄRKTEN FÖRDERBANDS
PROCEDE DE FABRICATION DE BANDE TRANSPORTEUSE RENFORCEE PAR DES CABLES EN ACIER

(43) Date of publication of application: 20.12.2000
(73) Proprietor: THE GOODYEAR TIRE & RUBBER COMPANY, Akron, Ohio 44316-0001 (US)
(72) Inventor: SCHWEITZER, David, Paul, North Canton, OH 44720 (US); HUTCHINS, Thomas, Goodsell, Uniontown, OH 44685 (US)
(74) Representative: Leitz, Paul
(86) International application number: US9801932
(87) International publication number: WO99039898

(56) References cited:
- EP-A- 0 785 420
- DE-A- 2 055 456
- US-A- 3 394 587
- US-A- 3 862 559
- US-A- 3 871 217

## Description

When making steel cable reinforced conveyor belts, it is desirable to maintain the tensions on each cable at a predetermined level. This invention provides a method of making a steel cable reinforced conveyor belt while monitoring the tension of each of the cables going into the construction.

Methods and apparatuses for measuring the tension in wires and cables have been known for some time. Most are based on determining the natural frequency of vibration of a known length of cable between two fixed points and calculating the tension according to the following formula:

T=4L²F²M

where T is tension, L is the length between the two fixed points, F is the natural frequency of vibration and M is the mass per unit of length of the cable. See e.g. U.S. Patent Nos. 3,871,217; 3,540,271; 3,394,587; 2,618,970 and 3,889,525.

In accordance with the practice of the present invention, there is provided a method of making a steel cable reinforced conveyor belt comprising the steps of encapsulating a plurality of steel cables between two layers of rubber while monitoring the tensions of all the cables by exciting a known length of each cable between a pair of clamps and measuring their natural frequencies by means of a combination of a permanent magnet and a linear Hall effect sensor in close proximity to each of the cables, sending the output signals from the sensors to a signal converter to convert the signal from analog to digital then to a digital signal processor to generate a signal for the period of each cable and sending the period data to a host computer to calculate the tension of each cable. The data from the last computer can then be fed back to adjust the tension of each cable.

The excitation of the cables is brought about by moving the cables away from their rest position and then allowing them to vibrate. As the cables vibrate near the permanent magnet/linear Hall effect sensor combinations which are in a non-contact proximity to each cable, the sensors sense the changes in the magnetic flux and their output signals vary as the positions of the cables change. The periods of the sensors' outputs are detected and converted from analog to digital by means of a comparator circuit. Sets of thirty-two digital signals are read in parallel by a digital signal processor (DSP) at a regular rate prescribed by an internal DSP timer and interrupt.

A time counter is incremented by one with each interrupt. A time stamp (value of the counter) is saved in the DSP memory for each channel each time the digital signal for that channel transitions low to high. Time stamps are collected in the DSP memory under interrupts long enough for at least one cable cycle to be detected. The time stamps are converted to periods.

The integer period values are sent to the host computer. The host knows the time interval for each time counter increment so that the period in seconds can be determined and the tensions are then calculated.

## Claims

1. A method of monitoring the tension of cables by exciting a known length of each cable between a pair of clamps, measuring the cable's natural frequencies by means of sensors located in close proximity to the cables, using the frequency data to calculate the tension of each cable, the method being **characterized**
**by** being used while making a steel cable reinforced conveyor belt comprising the step of encapsulating a plurality of steel cables between two layers of rubber;
by measuring the cable's natural frequencies by means of a combination of a permanent magnet and a linear Hall effect sensor in close proximity to each of the cables; and
by sending output signals from the sensor to a signal converter to convert the output signal from analog to digital, then to a digital signal processor to generate a signal for the period of each cable and sending the period data to a host computer to calculate the tension of each cable.

2. The method of claim 1 including the step of adjusting the tension of each cable so as to maintain the tension at a predetermined level.

## Patentansprüche

1. Verfahren zum Überwachen der Spannung von Seilen, indem
eine bekannte Länge jedes Seils zwischen zwei Klemmen erregt wird, die Eigenfrequenzen des Seils mittels Sensoren gemessen werden, die in enger Nähe zu den Seilen angeordnet sind, und die Frequenzdaten verwendet werden, um die Spannung jedes Seils zu berechnen, wobei das Verfahren **dadurch gekennzeichnet ist, dass** es verwendet wird, während ein stahlseilverstärktes Förderband hergestellt wird, mit dem Schritt, dass eine Vielzahl von Stahlseilen zwischen zwei Kautschukschichten eingebettet wird;
die Eigenfrequenzen des Seils mittels einer Kombination aus einem Permanentmagneten und einem linearen Hall-Effekt-Sensor in enger Nähe zu jedem der Seile gemessen wird; und
Ausgangssignale von dem Sensor zu einem Signalwandler, um das Ausgangssignal von analog nach digital zu wandeln, und dann zu einem digitalen Signalprozessor gesendet werden, um ein Signal für die Periode jedes Seils zu erzeugen, und die Periodendaten zu einem Host-Computer gesendet werden, um die Spannung jedes Seils zu berechnen.

2. Verfahren nach Anspruch 1,
das den Schritt umfasst, dass, die Spannung jedes Seils so eingestellt wird, dass die Spannung auf einem vorbestimmten Niveau aufrechterhalten wird.

## Revendications

1. Procédé pour surveiller la tension de câbles en excitant une longueur connue de chaque câble entre une paire de pinces, en mesurant les fréquences naturelles du câble à l'aide de capteurs disposés à proximité étroite des câbles, en utilisant les données de fréquences pour calculer la tension de chaque câble, le procédé étant **caractérisé par** le fait de l'utiliser dans la fabrication d'une courroie transporteuse renforcée avec des câbles en acier, comprenant l'étape consistant à encapsuler plusieurs câbles en acier entre deux couches de caoutchouc ; de mesurer les fréquences naturelles du câble à l'aide d'une combinaison d'un aimant permanent et d'un capteur de l'effet Hall linéaire à proximité étroite de chacun des câbles ; et d'envoyer des signaux de sortie depuis les capteurs jusqu'à un convertisseur de signaux pour convertir les signaux de sortie de la forme analogique à la forme numérique, et ensuite à un dispositif de traitement de signaux numériques dans le but de générer un signal pour la période de chaque câble avant d'envoyer les données périodiques à un ordinateur hôte dans le but de calculer la tension de chaque câble.

2. Procédé selon la revendication 1, englobant l'étape consistant à régler la tension de chaque câble de façon à maintenir la tension un niveau prédéterminé.
